# EUROPÄISCHE PATENTSCHRIFT

(11) **EP 0 623 196 B1**
(45) Veröffentlichungstag und Bekanntmachung des Hinweises auf die Patenterteilung: **11.09.1996**
(21) Anmeldenummer: 93903220.7
(22) Anmeldetag: 22.01.1993
(51) Int. Cl.: F16D 65/097, F16D 66/02

(54) **SCHWIMMSATTEL-SCHEIBENBREMSE MIT SPREIZFEDERN FÜR DIE BREMSBACKEN**
FLOATING CALIPER DISC BRAKE WITH EXPANSION SPRINGS FOR THE BRAKE SHOES
FREIN A DISQUE A ETRIER FLOTTANT COMPORTANT DES RESSORTS ECARTEURS POUR LA MACHOIRE DE FREIN

(30) Priorität: 28.01.1992 DE 4202181
(43) Veröffentlichungstag der Anmeldung: 09.11.1994
(73) Patentinhaber: ITT Automotive Europe GmbH, D-60488 Frankfurt am Main (DE)
(72) Erfinder: RÜCKERT, Helmut, D-6107 Reinheim 3 (DE); TEITGE, Hilmar, D-6000 Frankfurt/M. 70 (DE); WEIDENWEBER, Michael, D-6000 Frankfurt/Main 70 (DE)
(86) Internationale Anmeldenummer: EP9300141
(87) Internationale Veröffentlichungsnummer: WO9315331

(56) Entgegenhaltungen:
- DE-A- 2 205 005
- DE-A- 2 258 050
- FR-A- 1 592 769
- GB-A- 2 178 807
- GB-A- 2 257 483
- JP-Y- 3 001 632
- US-A- 4 415 068
- US-A- 5 069 313

## Beschreibung

Die Erfindung betrifft eine Schwimmsattel-Scheibenbremse, bei der die Bremsbacken in Bremslöserichtung mittels Spreizfedern vorgespannt sind, um das Einstellen eines Bremslüftspiels zwischen den Bremsbacken und der Bremsscheibe nach der Bremsbetätigung zu unterstützen, gemäß dem Oberbegriff des Patentanspruchs 1.

Eine derartige Scheibenbremse ist beispielsweise aus der US 5 069 313 bekannt. Bei der bekannten Scheibenbremse sind zwei gebogene Drahtfedern an zwei Bremsträgerarmen angeordnet. Die Enden der Drahtfedern sind an den Rückenplatten der Bremsbacken befestigt und spannen die Bremsbacken in Bremslöserichtung vor. Beim Auswechseln der Bremsbacken sind die Drahtfedern nicht mehr befestigt und können verloren gehen.

Aufgabe der Erfindung ist es, eine Schwimmsattel-Scheibenbremse hinsichtlich der Verliersicherheit der Spreizfedern und hinsichtlich der gleichmäßigen Verteilung des Bremslüftspiels auf die Bremsbacken zu verbessern.

Die Lösung der Aufgabe ergibt sich aus dem kennzeichnenden Teil des Patentanspruchs 1. Im Prinzip besteht die erfindungsgemäße Lösung darin, eine Spreizfeder an einem ortsfesten Punkt der Scheibenbremse auf einem Trägerarm des Bremsträgers zu befestigen. Von der symmetrisch über dem äußeren Rand der Bremsscheibe angeordneten Befestigungsstelle erstrecken sich jeweils zwei Federarme in die Bremse hinein, wo sie an den Rückenplatten der Bremsbacken anliegen und diese in Bremslöserichtung vorspannen. Aufgrund ihrer ortsfesten Fixierung wird die Spreizfeder als Ganzes nicht verschoben, wenn mit zunehmendem Reibbelagverschleiß der Schwimmsattel und relativ zu diesem die kolbenseitige Bremsbacke in entgegengesetzte axiale Richtungen verschoben werden. Lediglich die Federarme der Spreizfeder werden symmetrisch zueinander axial ausgelenkt. Die erfindungsgemäße Anordnung gewährleistet eine gleichmäßige Verteilung des Bremslüftspiels auf beide Bremsbacken.

Aus den Ansprüchen 2 bis 6 ergeben sich bevorzugte Ausführungformen der Erfindung, die hinsichtlich ihrer einfachen, kostengünstigen und funktionellen Ausgestaltung besonders vorteilhaft sind.

Ein Ausführungsbeispiel der Erfindung wird nachfolgend anhand der Zeichnungen näher erläutert.

Es zeigen:
- Fig. 1: eine Draufsicht auf eine Schwimmsattel-Scheibenbremse mit einer erfindungsgemäßen Federanordnung in einer ersten Ausführungsform;
- Fig. 2: eine teilweise geschnittene Seitenansicht gemäß Linie A-A von Fig. 1.

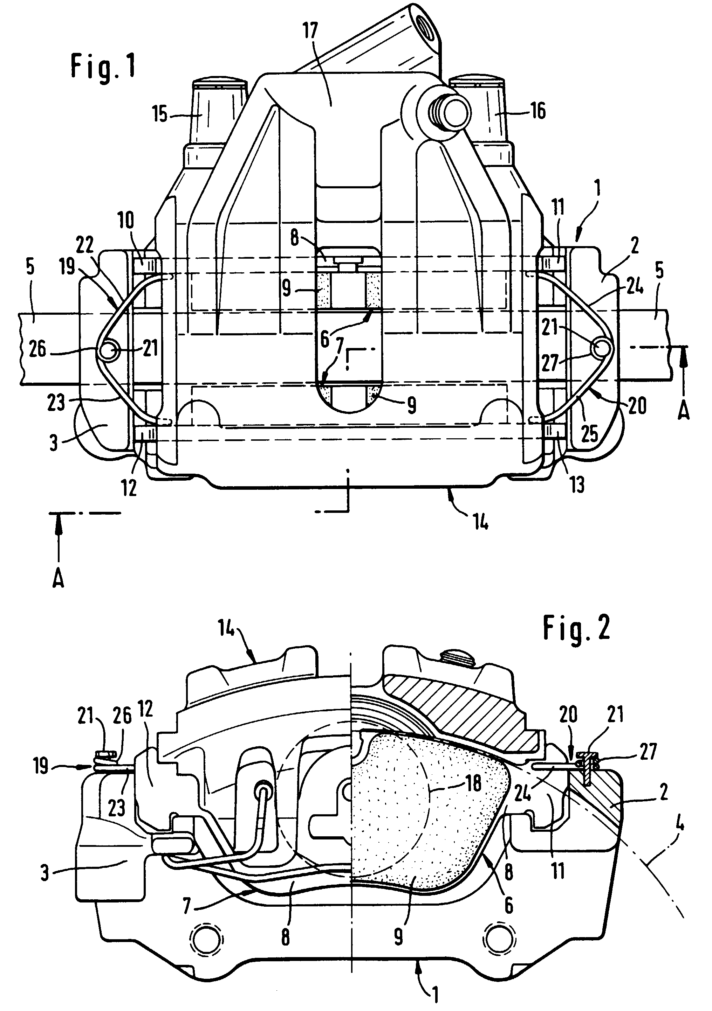

Die in den Figuren dargestellte Schwimmsattel-Scheibenbremse weist einen ortsfesten Bremsträger 1 auf, der mit zwei Trägerarmen 2,3 über den äußeren Rand 4 einer Bremsscheibe 5 ragt. Beiderseits der Bremsscheibe 5 sind zwei Bremsbacken 6,7 angeordnet, die jeweils eine Rückenplatte 8 und einen auf der Rückenplatte 8 befestigten Reibbelag 9 aufweisen. Die Rückenplatten 8 weisen hammerkopfförmige Vorsprünge 10,11,12,13 auf, die in Umfangsrichtung abstehen und zur Abstützung der Bremsbacken 6,7 an den Trägerarmen 2,3 axial verschiebbar geführt sind. Die beim Bremsen an den Bremsbacken 6,7 auftretenden Reibkräfte werden über die Vorsprünge 10,11,12,13 auf die Trägerarme 2,3 übertragen. Ein Schwimmsattel 14 ist mittels zweier Bolzenführungen 15,16 am Bremsträger 1 axial verschiebbar geführt. Der Schwimmsattel 14 umgreift die Bremsbacken 6,7 und den äußeren Rand 4 der Bremsscheibe 5 und ist mit einer Betätigungsvorrichtung 17 versehen, die einen in Fig. 2 durch Strichelung angedeuteten Bremskolben 18 aufweist. Bei Betätigung der Betätigungsvorrichtung 17 wird die kolbenseitige Bremsbacke 6 mittels des Bremskolbens 18 direkt und die gegenüberliegende, äußere Bremsbacke 7 aufgrund einer Verschiebung des Schwimmsattels 14 indirekt an die Bremsscheibe 5 angedrückt.

Nach der Bremsbetätigung muß zwischen den Reibflächen der Bremsbacken 6,7 und der Bremsscheibe 5 ein Lüftspiel eingestellt werden, um ein unbeabsichtigtes Reiben der Reibbeläge 9 an der Bremsscheibe 5 zu vermeiden. Da die kolbenseitige Bremsbacke 6 zusammen mit dem Kolben 18, die gegenüberliegende Bremsbacke 7 aber zusammen mit dem gesamten Schwimmsattel 14 bewegt werden muß, können durchaus verschieden starke Rückstellkräfte zur Einstellung des Lüftspiels an der Bremsbacke 6 und der Bremsbacke 7 erforderlich sein.

Zur Einstellung des Lüftspiels sind zwei Spreizfedern 19,20 vorgesehen, die mittels Kerbnägeln 21 an den Trägerarmen 2,3 befestigt sind. Die Kerbnägel 21 sind jeweils in einem über dem äußeren Rand 4 der Bremsscheibe 5 angeordneten Abschnitt der Trägerarme 2,3 und bezüglich der Dicke der Bremsscheibe 5 mittig angeordnet. Die Spreizfedern 19,20 sind einstückig aus Federdraht geformt und besitzen jeweils zwei Federarme 22,23,24,25, die von einem schlaufenförmig um den Kerbnagel 21 gewickelten Befestigungsabschnitt 26,27 ausgehen. Die Federarme 22,23 bzw. 24,25 sind zueinander V-förmig angeordnet und liegen mit ihren freien Enden an den hammerkopfförmigen Vorsprüngen 10,12 bzw. 11,13 der Rückenplatten 8 an. Die Spreizfedern 19,20 sind vorgespannt, so daß ihre Federarme 22,23,24,25 Federkräfte in Bremslöserichtung auf die Vorsprünge 10,11,12,13 der Rückenplatten 8 ausüben. Nach der Betätigung der Bremse werden also die Bremsbacken 6,7 durch die Spreizfedern 19,20 in axialer Richtung von der Bremsscheibe 5 weggeschoben, wobei zwischen den Reibflächen der Bremsbacken 6,7 und der Bremsscheibe 5 ein Lüftspiel eingestellt wird. Wenn die zur Verschiebung der kolbenseitigen Bremsbacke 6 erforderliche Kraft von der zur Verschiebung der gegenüberliegenden Bremsbacke 7 erforderlichen Kraft abweichen sollte, ist es zweckmäßig, die Federarme 22,24 mit einer von den Federarmen 23,25 abweichenden Steifigkeit auszugestalten. Dies kann beispielsweise dadurch geschehen, daß die Federarme 22,24 in ihrer Formgebung oder Dicke von den Federarmen 23,25 abweichen. In vorteilhafter Weise liegen die Federarme 22,23,24,25 mit ihren freien Enden an Abschnitten der hammerkopfförmigen Vorsprünge 10,11,12,13 an, die sich in radialer Richtung außerhalb des Randes 4 der Bremsscheibe 5 befinden. Diese Anordnung gewährleistet, daß die Federarme 22,23,24,25 selbst bei vollständig abgenutzten Reibbelägen 9 nicht mit der Bremsscheibe 5 in Berührung kommen können. Um die Gefahr vollständig auszuschließen, daß die Federarme 22,23,24,25 im Fahrbetrieb verrutschen und dann eventuell doch an der Bremsscheibe 5 schleifen könnten, ist es zweckmäßig, in den zur Anlage der Federarme 22,23,24,25 bestimmten Bereichen der Vorsprünge 10,11,12,13 Vertiefungen, Öffnungen, Bohrungen, Nuten oder dergl. vorzusehen, in die die freien Enden der Federarme 22,23,24,25 eingreifen.

## Patentansprüche

1. Schwimmsattel-Scheibenbremse mit einem ortsfesten Bremsträger (1), der zwei über den äußeren Rand (4) einer Bremsscheibe (5) ragende Trägerarme (2,3) aufweist, mit beiderseits der Bremsscheibe (5) angeordneten, je einen Reibbelag (9) und eine Rückenplatte (8) aufweisenden Bremsbacken (6,7), die an den Trägerarmen (2,3) verschiebbar abgestützt sind, mit einem am Bremsträger (1) axial verschiebbar geführten Schwimmsattel (14), der die Bremsbacken (6,7) umgreift und einen zum Andruck der Bremsbacken (6,7) an die Bremsscheibe (5) bestimmte Betätigungsvorrichtung (17) aufweist, mit einer auf die Bremsbacken (6,7) axial in Bremslöserichtung einwirkenden Federanordnung, die nach dem Bremsen das Einstellen eines Lüftspiels zwischen Bremsbacken (6,7) und Bremsscheibe (5) unterstützt, wobei die Federanordnung zumindest eine Spreizfeder (19,20) aufweist, die an einem Trägerarm (2,3) des Bremsträgers (1) in axialer Richtung insgesamt unverschiebbar befestigt ist, wobei die Befestigung an einem über dem äußeren Rand (4) der Bremsscheibe (5) befindlichen Abschnitt des Trägerarms (2,3) erfolgt, und wobei die Spreizfeder (19,20) zumindest zwei Federarme (22,23;24,25) aufweist, die an den Rückenplatten (8) der Bremsbacken (6,7) in axialer Richtung federnd anliegen, dadurch **gekennzeichnet,** daß die Spreizfeder (19,20) einen schlaufenförmig gebogenen Befestigungsabschnitt (26,27) aufweist, von dem zwei zueinander V-förmig angeordnete Federarme (22,23;24,25) ausgehen, und daß der Befestigungsabschnitt (26,27) einen an einem Trägerarm (2,3) angeordneten Kerbnagel (21) oder eine Schraube umschlingt.

2. Scheibenbremse nach Anspruch 1, dadurch **gekennzeichnet**, daß die Spreizfeder (19,20) zwei im wesentlichen gleiche Federarme (22,23;24,25) aufweist, die im wesentlichen symmetrisch zur Bremsscheibenebene angeordnet sind.

3. Scheibenbremse nach einem der vorhergehenden Ansprüche, dadurch **gekennzeichnet**, daß zwei Spreizfedern (19,20) vorgesehen sind, von denen je eine an einem Trägerarm (2,3) angeordnet ist.

4. Scheibenbremse nach Anspruch 3, dadurch **gekennzeichnet**, daß beide Spreizfedern (19,20) gleich ausgeführt sind.

5. Scheibenbremse nach einem der vorhergehenden Ansprüche, mit an den Rückenplatten (8) der Bremsbacken (6,7) angeordneten, in Umfangsrichtung weisenden, insbesondere hammerkopfförmigen Vorsprüngen (10,11,12,13), die an den Trägerarmen (2,3) axial verschiebbar anliegen und die zur Übertragung der beim Bremsen an den Bremsbacken (6,7) auftretenden Reibkräfte auf den Bremsträger (1) dienen, dadurch **gekennzeichnet**, daß die Federarme (22,23,24,25) der Spreizfedern (19,20) an den der Bremsscheibe (5) zugewandten Axialseiten der Vorsprünge (10,11,12,13) axial federnd anliegen.

6. Scheibenbremse nach einem der vorhergehenden Ansprüche, dadurch **gekennzeichnet**, daß die Spreizfeder (19,20) einstückig aus Federdraht geformt ist.

## Claims

1. A floating-caliper disc brake including a stationary brake carrier (1) provided with two carrier arms (2, 3) protruding beyond the outer rim (4) of a brake disc (5), brake shoes (6, 7) disposed on either side of the brake disc (5) and each having a friction pad (9) and a back plate (8), with the brake shoes being displaceably supported on the carrier arms (2, 3), a floating caliper (14) guided in axially displaceable manner on the brake carrier (1) and embracing the brake shoes (6, 7) and being furnished with an actuator (17) intended for applying the brake shoes (6, 7) against the brake disc (5), further comprising a spring assembly axially acting, in the brake releasing direction, on the brake shoes (6, 7) and supporting, after braking, the adjustment of a clearance between the brake shoes (6, 7) and the brake disc (5), the spring assembly including at least one expander spring (19, 20) which, generally, is undisplaceably secured, in the axial direction, to one of the carrier arms (2, 3) of the brake carrier (1), the fixation being effected on a section of the carrier arm (2, 3) located above the outer rim (4) of the brake disc (5), and the expander spring (19, 20) comprising at least two spring struts (22, 23; 24, 25) which are in resilient abutment, in the axial direction, with the back plates (8) of the brake shoes (6, 7),
**characterized** in that the expander spring (19, 20) comprises a mounting section (26, 27) bent in loop-type manner, from which emerge two spring struts (22, 23; 24, 25) disposed with respect to one another in V-type manner, and in that the mounting section (26, 27) embraces a notch-type nail (21) arranged on a carrier arm (2, 3) or a screw.

2. A disc brake as claimed in claim 1,
**characterized** in that the expander spring (19, 20) comprises two substantially identical spring struts (22, 23; 24, 25) disposed in substantially symmetrical relationship to the brake disc plane.

3. A disc brake as claimed in any one of the preceding claims,
**characterized** in that two expander springs (19, 20) are provided, and one of them is located on each carrier arm (2, 3).

4. A disc brake as claimed in claim 3,
**characterized** in that the two expander springs (19, 20) are of identical design.

5. A disc brake as claimed in any one of the preceding claims, comprising projections (10, 11, 12, 13), in particular, of hammer head-type configuration, extending in the circumferential direction and located on the back plates (8) of the brake shoes (6, 7), which projections are in axially displaceable abutment with the carrier arms (2, 3) and serve for transmitting the friction forces to the brake carrier (1) which develop on the brake shoes (6, 7) during braking,
**characterized** in that the spring struts (22, 23, 24, 25) of the expander springs (19, 20) are in axially resilient abutment with the axial sides of the projections (10, 11, 12, 13) facing the brake disc (5).

6. A disc brake as claimed in any one of the preceding claims,
**characterized** in that the expander spring (19, 20) is integrally formed of spring wire.

## Revendications

1. Frein à disque à étrier flottant, comprenant un support de frein (1) fixe, qui comporte deux bras de support (2, 3) qui font saillie au-delà du bord extérieur (4) d'un disque de frein (5), des plaquettes de frein (6, 7), qui sont disposées de part et d'autre du disque de frein (5) et comportent chacune une garniture de friction (9) et une plaquette de support (8) et qui prennent appui sur les bras de support (2, 3) de façon à pouvoir être déplacées d'une manière coulissante, un étrier flottant (14), qui est guidé sur le support de frein (1) de façon à pouvoir être déplacé d'une manière coulissante suivant la direction axiale et qui entoure les plaquettes de frein (6, 7) et comporte un dispositif d'actionnement (17) destiné à appliquer les plaquettes de frein (6, 7) sur le disque de frein (5), un agencement de ressort, qui exerce une action sur les plaquettes de frein (6, 7) suivant la direction axiale et dans le sens de desserrement du frein et qui, après le freinage, favorise l'établissement d'un entrefer entre les plaquettes de frein (6, 7) et le disque de frein (5), cet agencement de ressort comportant au moins un ressort d'écartement (19, 20) qui est fixé sur un bras de support (2, 3) du support de frein (1) de façon à ne pas pouvoir être déplacé dans son ensemble d'une manière coulissante suivant la direction axiale, la fixation ayant lieu sur une section du bras de support (2, 3) qui est située au-delà du bord extérieur (4) du disque de frein (5), tandis que le ressort d'écartement (19, 20) comporte au moins deux branches de ressort (22, 23 ; 24, 25) qui prennent appui élastiquement sur les plaquettes de support (8) des plaquettes de frein (6, 7) suivant la direction axiale, caractérisé en ce que le ressort d'écartement (19, 20) comporte une section de fixation (26, 27) qui est pliée en forme de boucle et qui est prolongée par deux branches de ressort (22, 23 ; 24, 25) disposées en V l'une vis-à-vis de l'autre, et en ce que la section de fixation (26. 27) s'enroule autour d'une cheville à entaille (21), d'une vis, disposée sur un bras de support (2, 3).

2. Frein à disque suivant la revendication 1, caractérisé en ce que le ressort d'écartement (19, 20) comporte deux branches de ressort (22, 23 ; 24, 25) pratiquement o identiques qui sont disposées d'une manière pratiquement symétrique vis-à-vis du plan du disque de frein.

3. Frein à disque suivant l'une des revendications précédentes, caractérisé en ce qu'il est prévu deux ressorts d'écartement (19, 20) qui sont disposés chacun sur un bras de support (2, 3) respectif.

4. Frein à disque suivant la revendication 3, caractérisé en ce que les deux ressorts d'écartement (19, 20) sont réalisés d'une manière identique.

5. Frein à disque suivant l'une des revendications précédentes, comprenant des parties en saillie (10, 11, 12, 13), notamment en forme de tête de marteau, qui sont disposées sur les plaquettes de support (8) des plaquettes de frein (6. 7) et sont orientées suivant la direction circonférentielle et qui sont en appui sur les bras de support (2, 3) de façon à pouvoir être déplacées d'une manière coulissante suivant la direction axiale et servent à transmettre au support de frein (1) les forces de friction produites sur les plaquettes de frein (6, 7) lors du freinage, caractérisé en ce que les branches (22, 23, 24, 25) des ressorts d'écartement (19, 20) sont en appui élastique suivant la direction axiale sur les côtés des parties en saillie (10, 11, 12, 13) qui font face au disque de frein (5) suivant la direction axiale.

6. Frein à disque suivant l'une des revendications précédentes, caractérisé en ce que le ressort d'écartement (19, 20) est façonné, d'une seule pièce, en fil métallique à ressort.
